# EUROPÄISCHE PATENTSCHRIFT

(11) **EP 2 588 767 B1**
(45) Veröffentlichungstag und Bekanntmachung des Hinweises auf die Patenterteilung: **10.12.2014**
(21) Anmeldenummer: 12735440.5
(22) Anmeldetag: 12.06.2012
(51) Int. Cl.: F16C 17/03, F16C 17/12, F16C 33/10, F16C 17/24, F16C 37/00

(54) **KIPPSEGMENTLAGER**
TILTING-SEGMENT BEARING
PALIER À PATINS OSCILLANTS

(30) Priorität: 24.06.2011 DE 102011105762
(43) Veröffentlichungstag der Anmeldung: 08.05.2013
(73) Patentinhaber: Zollern BHW Gleitlager GmbH & CO. KG, 38124 Braunschweig (DE)
(72) Erfinder: KOCH, Thilo, 37115 Duderstadt (DE); DRIFTMEIER, Klaus, 38229 Salzgitter (DE); SCHWEYDA, Christian, 38118 Braunschweig (DE)
(74) Vertreter: Friedrich, Andreas
(86) Internationale Anmeldenummer: PCT/DE2012/000610
(87) Internationale Veröffentlichungsnummer: WO 2012/175068

(56) Entgegenhaltungen:
- JP-A- 58 180 815
- US-A- 4 247 157
- US-A- 4 291 926
- US-A- 4 497 587
- US-A- 5 738 447
- US-A- 5 879 085

## Beschreibung

Die Erfindung betrifft ein Kippsegmentlager zum Lagern einer Welle mit einer Längsachse, das wenigstens zwei in Umfangsrichtung voneinander beabstandete Kippsegmente, die jeweils eine Lagerfläche aufweisen, und wenigstens einen Warmölausleiter aufweist, der in einem Zwischenraum zwischen den wenigstens zwei Kippsegmenten angeordnet ist, wenigstens einen sich in axialer Richtung erstreckenden ersten Damm, eine in einer Umlaufrichtung der Welle hinter dem ersten Damm angeordnete Öleinspritzeinrichtung und einen ersten Ölaustrag aufweist, wobei die Öleinspritzeinrichtung eingerichtet ist, Öl derart auf die Welle zu spritzen, dass an der Welle haftendes Öl abgelöst wird und sich ein Gemisch aus dem abgelösten Öl und dem eingespritzten Öl bildet, und durch den ersten Ölaustrag zumindest ein Teil des Gemisches austragbar ist.

Derartige Lager sind aus dem Stand der Technik beispielsweise aus der US 5 879 085 B1 seit langem bekannt. Sie umfassen wenigstens zwei in Umfangsrichtung voneinander beabstandete Kippsegmente, die jeweils eine Lagerfläche aufweisen. Diese Kippsegmente sind zumeist einzeln mit einem Öl geschmiert. Dieses Öl bildet einen Schmierfilm, der sich im Schmierspalt zwischen der Lagerfläche eines jeden der Kippsegmente und der zu lagernden Welle befindet. Aufgrund der Rotation der Welle wird das Öl durch diesen Schmierspalt hindurch gefördert. Dabei wird es erwärmt, so dass es den Schmierspalt wärmer verlässt, als es in ihn eingetreten ist.

Ein Kippsegmentlager mit den verschiedenen Kippsegmenten ist für eine bestimmte Umlaufrichtung der Welle vorgesehen. Jedes der Kippsegmente weist eine vordere und eine hintere bzw. eine vorlaufende und eine nachlaufende Kante auf. Dabei ist die vordere oder vorlaufende Kante die Kante, die von einem Punkt auf der sich drehenden Welle zuerst überstrichen wird, während die hintere oder nachlaufende Kante des Kippsegmentes die Kante ist, die von dem Punkt auf der Welle als letztes überlaufen wird. Wenn im Folgenden von "in einer Umlaufrichtung der Welle vorn" und "in einer Umlaufrichtung der Welle hinten" die Rede ist, ist dies in diesem Sinne zu verstehen. Eine Stelle auf der sich drehenden Welle kommt folglich zunächst an einem Punkt auf dem Kippsegment vorbei der sich "in Drehrichtung der Welle vorn" befindet, bevor sie an einem Punkt des Kippsegments vorbeikommt, der sich "in einer Drehrichtung der Welle hinten" befindet.

Um Gleitlager weiterzuentwickeln und die Leistungsfähigkeit zu erhöhen, soll beispielsweise bei gleichbleibender Bauform und Größe der Lagerung das maximale Gewicht der zu lagernden Welle oder die maximal erreichbaren Drehzahlen erhöht werden. Diese Steigerung der Leistungsfähigkeit wird beispielsweise dadurch erreicht, dass mehr kühles Öl zugeführt wird oder kühleres Öl gezielt an den am höchsten belasteten und somit heißesten Stellen des Gleitlagers eingebracht wird. Alternativ oder zusätzlich dazu kann warmes Öl, das beispielsweise durch den Schmierspalt zwischen einem der Kippsegmente und der Welle gelangt ist, daran gehindert werden, in den nächsten Schmierspalt zwischen dem sich anschließenden Kippsegment und der Welle zu gelangen.

Dazu ist es beispielsweise aus der US 4,497,587 bekannt, die Zufuhr von Schmieröl in einem zwischen zwei benachbarten Kippsegmenten angeordneten separaten Bauteil anzuordnen. Dieses weist in Umlaufrichtung der Welle vorn einen Damm auf, durch den sich an der Welle befindliches Öl am Eindringen in den nächsten Schmierspalt des sich anschließenden Kippsegmentes gehindert werden soll. Dabei soll der Abstand zwischen der radial innenliegenden Oberfläche des Dammes und der Welle vorzugsweise etwas größer sein als der Abstand zwischen der Lagerfläche der Kippsegmente und der Welle. Dies bedeutet, dass lediglich aus dem Schmierspalt des jeweils vorangegangenen Kippsegmentes austretendes Öl, das durch die hohe Rotationsgeschwindigkeit der Welle und die daraus resultierende Fliehkraft nach außen beschleunigt wird, durch diesen Damm abgefangen werden kann. In Rotationsrichtung der Welle hinter diesen Damm befindet sich in dem separaten Bauteil eine Wanne, die von radial außen mit Frischöl gefüllt wird. Durch die Rotation der Welle wird aus dieser Wanne genau die Menge von Öl in den Schmierspalt zwischen dem sich anschließenden Kippsegment und der Welle gezogen, wie für eine ausreichende Schmierung nötig ist. Nachteilig ist jedoch, dass ein an der Welle anhaftender Ölfilm, der aus warmem Öl besteht, das im Schmierspalt zwischen dem vorhergehenden Kippsegment und der Welle bereits erwärmt wurde, nicht von der Welle abgelöst werden kann und auch nicht von dem vorgesehen Damm daran gehindert werden kann, in den Schmierspalt zwischen dem nachfolgenden Kippsegment und der Welle einzudringen. Mit der dort beschriebenen Ausgestaltung des Bauteils zwischen den einzelnen Kippsegmenten kann lediglich ein Teil des sich sowieso von der Welle lösenden Öls abgefangen werden. Der von diesem Damm nicht abgefangene, sich an der Welle befindliche Ölfilm tritt praktisch vollständig in den nächsten Schmierspalt ein und wird hier weiter erwärmt.

Eine ähnliche Ausgestaltung ist aus der US 5,738,447 bekannt. Auch hier ist zwischen zwei benachbarten Kippsegmenten ein separates Bauteil angeordnet, das über einen Damm und eine in Rotationsrichtung der Welle dahinter angeordnete Ölzufuhreinrichtung verfügt. Auch hier wird durch den Damm ein Teil des Öls abgeblockt, das aus dem Schmierspalt zwischen dem vorhergehenden Segment und der Welle austritt. Auch hier besteht jedoch ein gewisser Abstand zwischen der radial inneren Oberfläche des Damms und der zu lagernden Welle. Auch in diesem Ausführungsbeispiel kann daher ein an der Welle haftender Ölfilm nicht daran gehindert werden, in den Schmierspalt zwischen dem folgenden Kippsegment und der Welle einzudringen. Die Ölzuführeinrichtung ist im genannten Ausführungsbeispiel so ausgestaltet, dass das Öl direkt auf den zu füllenden Schmierspalt zwischen dem nachfolgenden Kippsegment und der Welle gesprüht wird. Damit soll sichergestellt werden, dass möglichst viel des kühlen Öles in den Schmierspalt eindringen kann.

Aus der US 5,288,153 ist ein Kippsegmentlager bekannt, bei dem ebenfalls zwischen zwei benachbart angeordneten Kippsegmenten ein zusätzliches separates Bauteil angeordnet ist. Dieses verfügt jedoch nicht über einen Damm zum Abfangen eines Teils an der Welle haftenden Öls. Stattdessen befindet sich an diesem Bauteil eine Mehrzahl von Öleinspritzdüsen, durch die frisches Öl unter hohem Druck auf die zu lagernde Welle gesprüht wird. Dadurch soll ein an der Welle anhaftender Ölfilm abgelöst werden. Dieser vermischt sich mit dem frischen Öl, so dass die Durchschnittstemperatur des Ölgemisches abgesenkt wird. Dieses Ölgemisch tritt dann in den Schmierspalt zwischen dem nachfolgenden Kippsegment und der Welle ein, so dass auch in diesem Fall der an der Welle haftende Film aus warmem Öl aus dem Schmierspalt zwischen dem vorhergegangenen Kippsegment und der Welle vollständig in den nachfolgenden Schmierspalt eingeht.

Aus der US 4,291,926 ist ebenfalls ein Kippsegmentlager bekannt, bei dem ebenfalls zwischen zwei benachbart angeordneten Kippsegmenten eine Ölzufuhrvorrichtung als separates Bauteil angeordnet ist.

Gleiches gilt für die US 7,758,247 B2. Auch hier sind Ölzuführbalken zwischen je zwei benachbart angeordneten Kippsegmenten vorgesehen. Diese erfüllen zum einen die Aufgabe, frisches Öl in das Lager einzuführen und zum anderen, eine in Umfangsrichtung gerichtete Bewegung der einzelnen Kippsegmente zu verhindern.

Auch aus der US 4,300,808 ist eine derartige Anordnung bekannt. Hierbei wird das zugeführte Frischöl zusätzlich verwendet, um die Kippsegmente zu kühlen. Nach dem Kühlen wird das Öl in radial von der Welle beabstandeten Kanälen abgeführt.

Auch die JP 581 80 815 sowie die US 4 247 157 A offenbaren jeweils ein Kippsegmentlager, bei dem zwischen zwei voneinander beabstandeten Kippsegmenten ein Warmölausleiter angeordnet ist.

Der Erfindung liegt daher die Aufgabe zugrunde, ein gattungsgemäßes Kippsegmentlager weiter zu entwickeln und die Leistungsfähigkeit zu steigern.

Die Erfindung löst die gestellte Aufgabe durch ein Kippsegmentlager zum Lagern einer Welle mit einer Längsachse gemäß dem Oberbegriff des Anspruchs 1, dass sich dadurch auszeichnet, dass in Umlaufrichtung der Welle hinter dem ersten Ölaustrag ein zweiter Damm und dahinter eine Öleinbringvorrichtung angeordnet ist, wobei der zweite Damm und die Öleinbringvorrichtung Teile des Warmölausleiters sind.

Durch die erfindungsgemäße Ausgestaltung eines Kippsegmentlagers wird eine Warmölüberschleppung, bei der warmes Öl aus einem Schmierspalt zwischen einem Kippsegment und der Lager in den nächsten Schmierspalt des anschließenden Kippsegmentes überschleppt wird, beeinträchtigt oder sogar gänzlich verhindert. Dies geschieht durch den wenigstens einen Warmölausleiter, der zwischen zwei benachbarten Kippsegmenten angeordnet wird. Er ersetzt dabei bekannte Öleinspritzungen, die in Zwischenräumen zwischen Kippsegmenten angeordnet werden können. Durch den Warmölausleiter wird zudem der Zwischenraum zwischen den beiden benachbarten Kippsegmenten ausgefüllt, so dass es hier nicht zu einem großen Ölvorrat kommen kann, in den durch Verwirbelungen zusätzliche Reibungseffekte auftreten können. Dadurch wird eine unnötige Erwärmung des Öls verhindert und so die Leistungsfähigkeit des Lagers gesteigert. Ein Warmölausleiter wird dabei fest in einem Gehäusering, an dem auch die Kippsegmente befestigt sind, angeordnet und behindert die Kippbeweglichkeit der einzelnen Kippsegmente nicht.

Der Warmölausleiter eines erfindungsgemäßen Kippsegmentlagers verfügt über einen ersten Damm, der sich in axialer Richtung entlang der Längsachse der Welle erstreckt. Bevorzugt erstreckt er sich über die gesamte axiale Länge des Kippsegmentlagers. Dabei muss selbstverständlich darauf geachtet werden, dass er nicht mit der Welle in Berührung kommt. Dazu muss der erste Damm zu der Welle ein Spiel aufweisen, das zumindest der maximalen Wellenverlagerung entspricht. Vorteilhafte Abstände zwischen den Innenflächen des ersten Damms und der Welle sind somit mindestens in der Größenordnung der maximalen Wellenverlagerung, also beispielsweise kleiner als 0,2 mm, bevorzugt kleiner als 0,15 mm, besonders bevorzugt kleiner als 0,1 mm. Auf diese Weise ist gewährleistet, dass ein Großteil des sich an der Welle befindlichen Öles, das in dem Schmierspalt zwischen dem vorangegangenen Kippsegment und der Welle erwärmt wurde, daran gehindert wird, in den nächsten Schmierspalt überschleppt zu werden.

Hinter dem ersten Damm befindet sich eine Öleinspritzeinrichtung, durch die frisches und kühles Öl auf die Welle gespritzt wird. Übliche Einspritztemperaturen des Öls liegen dabei bei 40- 50°C. In Einzelfällen können auch Einspritztemperaturen von 55 - 60 °C vorkommen. Je geringer die Einspritztemperatur ist, umso effektiver werden durch das eingespritzte Öl das Lager und die Welle gekühlt und desto höher ist die Leistungsfähigkeit des Kippsegmentlagers. Durch das Einspritzen des gekühlten Öles in der beschriebenen Form wird der letzte sich noch an der Welle befindliche Rest des aus dem vorangegangenen Schmierspalt überschleppten Öles aufgebrochen und von der Welle abgelöst. Er bildet dann ein Gemisch mit dem zugeführten Öl. Da durch den weiter vorne angeordneten ersten Damm bereits ein Großteil des sich an der Welle befindlichen warmen Öls abgefangen wurde, trägt das von der Welle abgelöste warme Öl nur einen sehr geringen Beitrag zu dem Gemisch bei. Die Temperatur des Gemisches wird daher im Wesentlichen von der Temperatur des eingespritzten frischen kühlen Öles bestimmt.

Der Warmölausleiter verfügt jedoch zudem über einen ersten Ölaustrag, durch den ein Teil dieses Gemisches aus dem von der Welle abgelösten warmen Öl und dem eingespritzten kühlen Öl wieder ausgetragen werden kann. Dies hat mehrere Vorteile. Zum einen wird damit gewährleistet, dass ein weiterer Anteil des Öls, das aus dem Schmierspalt des vorhergehenden Kippsegmentes stammt, effektiv daran gehindert wird, in den folgenden Schmierspalt einzudringen. Zudem hat der Ölaustrag zur Folge, dass mehr frisches Öl durch die Öleinspritzeinrichtung eingespritzt werden kann, als zum Schmieren des nächsten Schmierspaltes eigentlich nötig wäre. Der überschüssige Olanteil kann durch den Ölaustrag ausgetragen werden. Dies bedeutet, dass das Verhältnis zwischen dem eingespritzten kühlen Öl und dem von der Welle abgelösten warmen Öl weiter zugunsten des frischen Öls verschoben wird. Damit sinkt auch die Durchschnittstemperatur des Gemisches weiter ab, so dass durch den Ölaustrag eine noch effektivere Kühlung des Kippsegmentlagers erreicht wird.

Durch die erfindungsgemäße Ausgestaltung des Kippsegmentlagers und des darin enthaltenen Warmölausleiters wird folglich gewährleistet, dass allenfalls ein sehr geringer Teil des aus dem vorhergehenden Schmierspalt austretenden warmen Öles in den nächsten Schmierspalt eintreten kann. Dies wird durch die Kombination der verschiedenen Anteile des Warmölausleiters gewährleistet. Erst in Kombination entfalten sie ihre volle Wirkung. Der durch den Ölaustrag ausgetragene Teil des Gemisches des Öles wird aufgefangen, abgekühlt und der Öleinspritzeinrichtung wieder zugeführt.

In einer bevorzugten Ausführungsform befindet sich in Umlaufrichtung der Welle vor dem ersten Damm ein zweiter Ölaustrag. Durch diesen kann warmes Öl, das von dem ersten Damm abgefangen wurde, ausgetragen werden. Dieses ausgetragene Öl wird aufgefangen, abgekühlt und beispielsweise einer Öleinspritzeinrichtung wieder zugeführt. Dabei kann der zweite Ölaustrag Teil des Warmölausleiters sein oder als separates Bauteil oder als Teil der Kippsegmente ausgebildet sein. Durch einen Warmölausleiter der beschriebenen Ausführungsform kann folglich zum einen warmes, aus dem vorhergehenden Schmierspalt stammendes Öl abgeblockt und aus dem Lager geleitet werden, während gleichzeitig auch überschlepptes Öl, das als dünner Film an der Welle haftend am ersten Damm vorbeigeführt wird, abgespritzt, geblockt und aus dem Lager geleitet werden.

Damit wird eine effektive Kühlung des Lagers und insbesondere der Kippsegmente gewährleistet. Zudem können dadurch, dass durch den Warmölausleiter der Zwischenraum zwischen zwei benachbarten Kippsegmenten nahezu vollständig ausgefüllt wird, Wirbelverluste im Lager minimiert werden.

Innerhalb des Warmölausleiters kann eine Kammer vorgesehen sein, die durch Ölzuführungseinrichtungen im Lager mit gekühltem Öl versorgt wird. Diese Kammer gewährleistet eine Versorgung der Öleinspritzeinrichtung mit kühlem Öl.

Erfindungsgemäß sind in Umlaufrichtung der Welle hinter dem ersten Ölaustrag ein zweiter Damm und dahinter eine Öleinbringvorrichtung angeordnet, wobei der zweite Damm und die Öleinbringvorrichtung Teile des Warmölausleiters sind. Durch diesen zweiten Damm kann gewährleistet werden, dass das Gemisch aus dem eingespritzten frischen Öl und dem von der Welle abgelösten erwärmten Öl nahezu vollständig ausgeleitet wird und nicht zur Schmierung des nächsten Kippsegmentes bzw. des nächsten Schmierspaltes verwendet wird. Damit kann eine Warmölüberschleppung aus einem Schmierspalt in den folgenden Schmierspalt vollständig verhindert werden. Das für die Schmierung des folgenden Schmierspaltes nötige Öl wird durch die zusätzliche Öleinbringvorrichtung bereitgestellt. Da durch dieses eingebrachte Öl keine an der Welle befindliche Ölschicht mehr abgespritzt werden muss, kann hier das Öl mit deutlich geringerem Druck eingebracht werden. Dadurch kann eine homogenere Verteilung und eine laminarere Strömung des Öles in den Schmierspalt erreicht werden, wodurch ebenfalls Verluste durch Reibung und turbulente Strömungen des Öles im Schmierspalt verhindert oder zumindest verringert werden.

Erfindungsgemäß sind der zweite Damm und die Öleinbringvorrichtung können Teile des Warmölausleiters sein. Nicht erfindungsgemäß ist es möglich, die Öleinbringvorrichtung, wie aus dem Stand der Technik bekannt, im Bereich der Anströmkante, also der vorlaufenden Kante, des jeweiligen Kippsegmentes vorzusehen. In diesem Fall ist es möglich, die Anströmkante des jeweiligen Kippsegmentes als zweiten Damm auszubilden. In diesem Fall könnte die Anströmkante des auf dem Warmölausleiter folgenden Kippsegmentes beispielsweise scharfkantig ausgeformt sein, damit eine Abblockung des Gemisches aus von der Welle abgelösten Öl und frisch eingespritztem Öl gewährleistet wird. Dabei ist die Anströmkante so auszugestalten, dass sie dieses Gemisch auf den Öl-austrag leitet. Eine mögliche Ausgestaltung der Anströmkante des jeweiligen Kippsegmentes ist dabei eine Anschrägung der Segmentanströmseite, die einen Winkel von mehr als 90° zur Lagerfläche aufweist. Hier kommt das Prinzip einer berührungslosen Dichtung zum Tragen. Eine weitere mögliche Ausgestaltung der Anströmkante eines Kippsegmentes ist die Ausformung ähnlich eines Drehmeißels. Eine derartige Meißelkante an der Segmentanströmkante hat zu der Lagerfläche einen Winkel von weniger als 90° und ist nach unten hin abgerundet, so dass das abgeblockte Gemisch aus verschiedenen Ölen gezielt auf den Ölaustrag geleitet werden kann.

Natürlich ist es auch möglich, die genannten Ausgestaltungen zu wählen, wenn der zweite Damm, erfindungsgemäß, Teil des Warmölausleiters ist.

Nicht erfindungsgemäß ist es auch möglich, am Warmölausleiter lediglich den zweiten Damm vorzusehen und die dahinter anzuordnende Öleinbringvorrichtung als Teil des jeweiligen Kippsegmentes vorzusehen. Wichtig ist lediglich, dass die Öleinbringvorrichtung in Umlaufrichtung der Welle hinter dem zweiten Damm angeordnet wird, so dass der zweite Damm dafür sorgt, dass das Gemisch aus von der Welle abgelöstem Öl und frisch eingespritztem Öl, das durch die Öleinspritzeinrichtung auf die Welle gespritzt wurde, abgeblockt wird. So wird ein Übertrag von erwärmtem Öl aus einem Schmierspalt in den folgenden Schmierspalt sicher vermieden.

Bevorzugt weist die Öleinspritzeinrichtung eine Mehrzahl in axialer Richtung voneinander beabstandete Düsen auf. Durch diese wird das Öl bevorzugt senkrecht auf die Welle eingespritzt. Dadurch ist der Impulsübertrag auf den sich an der Welle befindenden Ölfilm am größten, so dass dieser sicher aufgebrochen und abgelöst werden kann. Alternativ dazu umfasst die Öleinspritzeinrichtung einen oder mehrere sich in axialer Richtung erstreckende Schlitze. Auf diese Weise ist insbesondere eine möglichst homogene Einspritzung des Öles durch die Öleinspritzeinrichtung gewährleistet.

Vorzugsweise sind der erste Damm und/oder der zweite Damm derart gebogen ausgestaltet, dass sich ein in axialer Richtung mittlerer Anteil des jeweiligen Dammes in Umlaufrichtung der Welle weiter vorn befindet als in axialer Richtung äußere Anteile des jeweiligen Damms. Damit wird gewährleistet, dass Öl, das von der Welle in einem in axialer Richtung mittleren Anteil des Lagers abgelöst wird, sicher und besonders einfach und wirksam nach radial außen geleitet wird, wo es das Lager verlassen kann. Als vorteilhaft hat es sich herausgestellt, wenn der erste Damm und/oder der zweite Damm eine Mehrzahl von in Umfangsrichtung voneinander beabstandete Lamellen umfasst. Auf diese Weise umfasst der jeweilige Damm nicht nur eine Anströmkante, sondern mehrere, die voneinander beabstandet angeordnet sind. Jede Lamelle des jeweiligen Dammes hat eine eigene Anströmkante und hat damit eine ähnliche Wirkung wie ein separater Damm. Auf diese Weise kann der Anteil des am Damm vorbeigeführten Öles weiter verringert werden.

Bevorzugt umfasst der erste Damm und /oder der zweite Damm eine Ableitfläche, die derart geformt ist, dass sich in Umdrehungsrichtung der Welle vor dem jeweiligen Damm befindliches Öl in axialer Richtung aus dem Lager leitbar ist. Auch hier ist eine bevorzugte Ausführungsform dergestalt ausgebildet, dass die Ableitfläche so gebogen ausgeformt ist, dass der in axialer Richtung mittlere Anteil weiter vorn ist, als Randanteile. Damit wird ein Ausleiten des vorn Damm abgeblockten Öls bzw. Ölgemisches gewährleistet.

Ein Kippsegmentlager umfasst vorteilhafterweise eine Mehrzahl von Segmenten, die über einen Umfang des Lagers verteilt sind. Dabei können die Segmente identisch oder auch verschieden ausgebildet sein. Insbesondere kann es sinnvoll sein, in einem unteren Bereich des Lagers, auf dem die Welle, die es zu lagern gilt, aufliegt, breitere, also in Umfangsrichtung längere Segmente vorzusehen, um hier der auftretenden Belastung besser standhalten zu können. Vorteilhafterweise befindet sich in jedem Zwischenraum, der durch zwei benachbarte Kippsegmente gebildet wird, ein Warmölausleiter. Diese können alle baugleich oder auch unterschiedlich ausgebildet sein. So kann es insbesondere sinnvoll sein, wenn beispielsweise die einzelnen Kippsegmente in Umfangsrichtung unterschiedlich lang sind, hinter einem derart langen Kippsegment einen Warmölausleiter vorzusehen, der dafür sorgt, dass möglichst kein Öl aus dem Schmierspalt des langen Kippsegmentes mit der Welle in den folgenden Schmierspalt überschleppt werden kann. Dies ist bei in Umfangsrichtung kürzeren Kippsegmenten ggf. nicht unbedingt nötig, da hier die auftretenden Temperaturen geringer sind als bei in Umfangsrichtung langen Segmenten.

Wird zum Schmieren eines Schmierspaltes die bereits beschriebene zusätzliche Öleinbringvorrichtung, die hinter dem zweiten Damm angeordnet ist, vorgesehen, hat dies den Vorteil, dass das Öl durch diese Öleinbringvorrichtung nicht nur mit geringerem Druck, sondern auch in einem spitzeren Winkel zur Wellenoberfläche eingebracht werden kann. Da es nicht nötig ist, eine sich noch an der Welle befindliche Ölschicht oder einen Ölfilm aufzubrechen und abzulösen, kann hier der Auftreffwinkel relativ gering gewählt werden. Auch dadurch werden eine laminarere Strömung und ein homogenes Aufbringen des Öles auf die Welle und insbesondere in den Schmierspalt des nachfolgenden Kippsegmentes gewährleistet.

Prinzipiell sind die oben beschriebenen Kippsegmentlager zum Lagern von Wellen mit unterschiedlichsten Durchmessern geeignet. Gängig sind beispielsweise Wellendurchmesser von 20 - 1000 mm, insbesondere für hohe Rotationsgeschwindigkeiten werden Wellen mit einem Durchmesser von 60 - 200 mm verwendet. Natürlich können jedoch auch andere Wellendurchmesser verwendet werden, wenn eine derartige Welle gelagert werden muss.

Mit Hilfe einer Zeichnung wird nachfolgend ein Ausführungsbeispiel der vorliegenden Erfindung näher erläutert. Es zeigt:
- Figur 1 -: eine Schnittdarstellung eines nicht erfindungsgemäßen Kippsegmentlagers;
- Figur 2 -: einen vergrößerten Ausschnitt aus Figur 1;
- Figur 3 -: eine schematische 3D-Ansicht eines Warmölausleiters,
- Figur 4 -: eine schematische Schnittdarstellung durch den Warmölausleiter aus Figur 3,
- Figur 5 -: eine schematische 3D-Ansicht eines nicht erfindungsgemäßen Warmölausleiters,
- Figur 6 -: eine Schnittdarstellung durch ein Kippsegmentlager gemäß einem Ausführungsbeispiel der vorliegenden Erfindung,
- Figur 7 -: einen vergrößerten Ausschnitt aus Figur 6,
- Figur 8 -: eine schematische 3D-Ansicht eines weiteren Warmölausleiters und
- Figur 9 -: eine schematische Schnittdarstellung durch den Warmölausleiter aus Figur 8.

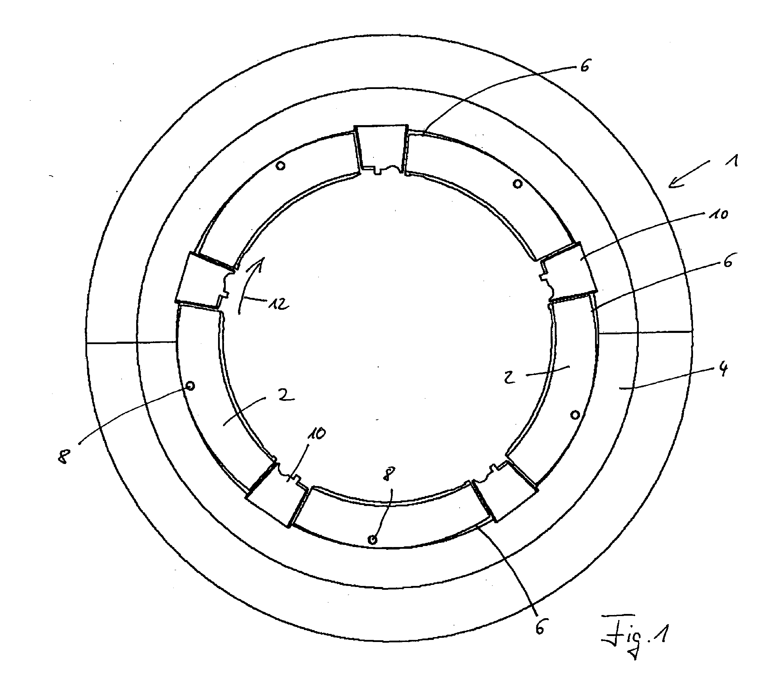

Figur 1 zeigt eine schematische Schnittansicht eines Kippsegmentlagers 1 nicht gemäß der vorliegenden Erfindung. Das Kippsegmentlager 1 verfügt im gezeigten Ausführungsbeispiel über fünf Kippsegmente 2, die an einem Lagerring 4 angeordnet sind. Dabei weisen Außenflächen 6 der einzelnen Kippsegmente 2 einen kleineren Radius auf als der Lagerring 4, wodurch die einzelnen Kippsegmente 2 um einen Lagerpunkt 8 kippbar sind.

Zwischen jeweils zwei Kippsegmenten 2 ist ein Warmölausleiter 10 angeordnet, der jedoch die Kippbarkeit der Kippsegmente 2 nicht beeinflusst. In Figur 1 ist keine zu lagernde Welle gezeigt, jedoch ist das gezeigte Kippsegmentlager 1 nur für eine bestimmte Rotationsrichtung einer zu lagernden Welle ausgelegt, die durch einen Richtungspfeil 12 angedeutet wird.

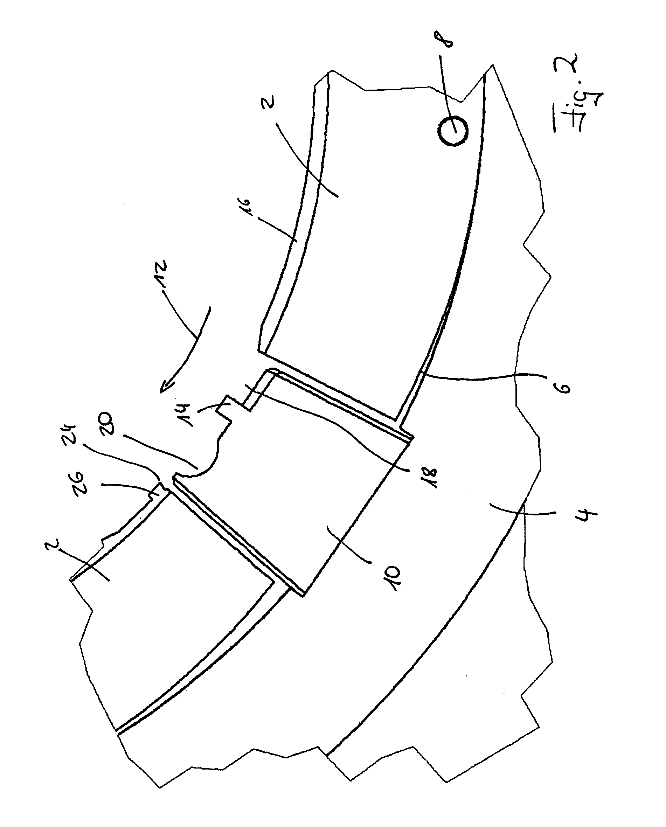

Figur 2 zeigt einen vergrößerten Ausschnitt aus Figur 1. Zwischen zwei Kippsegmenten 2 ist ein Warmölausleiter 10 angeordnet. Die Rotationsrichtung einer zu lagernden Welle ist wieder durch den Richtungspfeil 12 dargestellt, der also von "in Bewegungsrichtung der Welle vorn" nach "in Bewegungsrichtung der Welle hinten" zeigt.

Der gezeigte Warmölausleiter 10 verfügt an seiner nach radial innen weisenden Fläche über einen ersten Damm 14. Durch diesen wird gewährleistet, dass sich an der nicht gezeigten rotierenden Welle befindliches Öl, das durch die hohen Umdrehungsgeschwindigkeiten nach radial außen getragen wird, von dem ersten Damm 14 geblockt wird.

In Umdrehungsrichtung der Welle vor dem ersten Damm 14, in Figur 2 also links vom ersten Damm 14, befindet sich ein zweiter Ölaustrag 18. Durch diesen wird Öl, das vom ersten Damm 14 geblockt wird, aus dem Lager ausgetragen.

Hinter dem ersten Damm 14 verfügt der Warmölausleiter 10 über einen ersten Ölaustrag 20 und eine nicht gezeigte Öleinspritzeinrichtung 22. Durch die Öleinspritzenrichtung 22 wird frisches, kühles Öl auf die Welle gespritzt. Dadurch wird ein sich an der Welle befindender Ölfilm aufgebrochen und abgelöst, vermischt sich mit dem eingespritzten Öl und wird über den ersten Ölaustrag 20 aus dem Lager ausgetragen.

An einer Anströmkante 24 eines Kippsegments 2 befindet sich ein zweiter Damm 26, durch den das Gemisch aus frischem Öl und dem von der Welle abgespritzten Ölfilm am Eindringen in den folgenden Schmierspalt gehindert wird. Das durch die Öleinspritzeinrichtung 22 eingespritzte Öl vermischt sich mit dem Ölfilm, der von der Welle abgelöst wird. Um zu verhindern, dass dieses Gemisch in den Schmierspalt zwischen dem folgenden Kippsegment 2 und der Welle gelangt, ist der zweite Damm 26 vorgesehen. Durch die besondere Ausgestaltung der Anströmkante 24 wird das Ölgemisch in den ersten Ölaustrag 20 geleitet und von diesem aus dem Lager entfernt.

In Umdrehungsrichtung hinter dem zweiten Damm 26 befindet sich eine nicht gezeigte Öleinbringvorrichtung 28, die frisches, kühles Öl direkt in den Schmierspalt zwischen dem Kippsegment 2 und der Welle einführt.

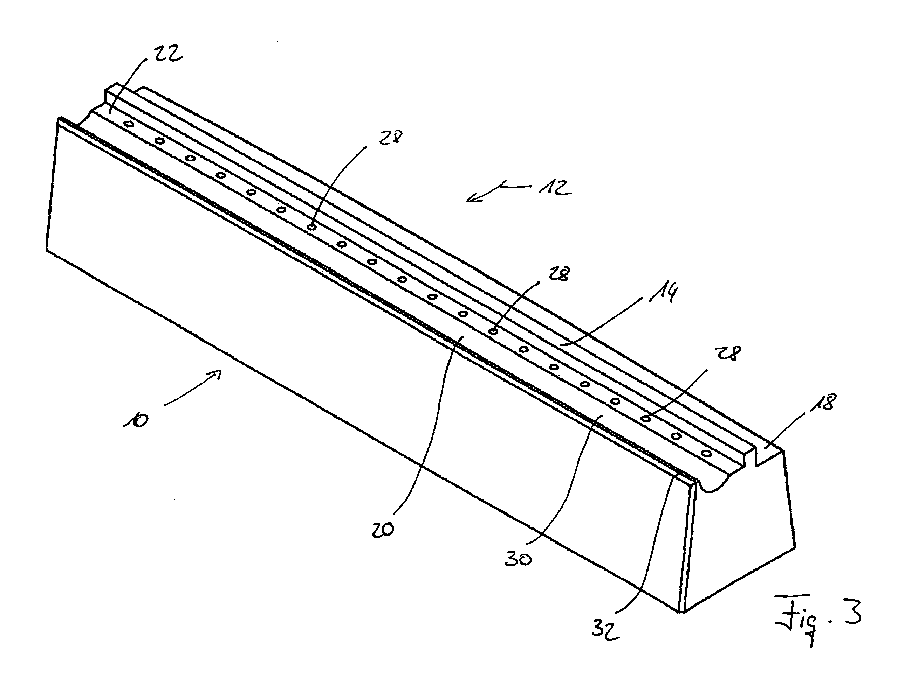

Figur 3 eine schematische 3D-Ansicht eines Warmölausleiters 10, wie er in den Figuren 1 und 2 verwendet wurde. Durch den Richtungspfeil 12 ist wieder die Rotationsrichtung einer Welle gezeigt, die in einem Kippsegmentlager 1 gelagert wird, in dem der Warmölausleiter 10 Verwendung findet. Er zeigt also von in Umdrehungsrichtung der Welle vorn nach in Umdrehungsrichtung der Welle hinten.

Von vorn nach hinten umfasst der Warmölausleiter 10 einen zweiten Ölaustrag 18, einen ersten Damm 14, eine Öleinspritzeinrichtung 22 sowie einen ersten Ölaustrag 20. Die beiden Ölausträge 18, 20 sind dabei als Rillen oder Vertiefungen ausgeführt, durch die jeweils ein Öl bzw. ein Ölgemisch aus dem Lager ausgetragen werden kann. Der zweite Ölaustrag 18 ist dabei vorgesehen, um das Öl auszutragen, das vom ersten Damm 14 abgeblockt wird. Direkt hinter dem ersten Damm 14 befindet sich die Öleinspritzeinrichtung 22, die im in Figur 3 gezeigten. Ausführungsbeispiel eine Mehrzahl voneinander in axialer Richtung beabstandete Düsen 28 aufweist. Diese erstrecken sich über die gesamte axiale Ausdehnung des Warmölausleiters 10 und sorgen so dafür, dass über die gesamte axiale Ausdehnung des Kippsegmentlagers 1 ein an der Welle haftender Ölfilm abgelöst wird.

Das durch die Öleinspritzeinrichtung 22 bzw. deren Düsen 28 eingespritzte Öl vermischt sich mit dem von der Welle abgelösten Ölfilm. Wie in Figur 2 zu erkennen ist, verfügt das Kippsegment 2 an seiner Anströmkante über einen zweiten Damm 26, der verhindert, dass dieses Ölgemisch in einen Schmierspalt zwischen dem Kippsegment 2 und der Welle eindringen kann. Stattdessen wird das Ölgemisch auf den ersten Ölaustrag 20 geleitet, der neben einer Ableitfläche 30 über eine Ableitkante 32 verfügt. Die Ableitkante 32 hat jedoch keine blockende Funktion, sondern ist derart gestaltet, dass von einer Anströmkante 24 geblocktes Öl bzw. Ölgemisch auf der Ableitfläche 30 entlang strömen und das Lager verlassen kann.

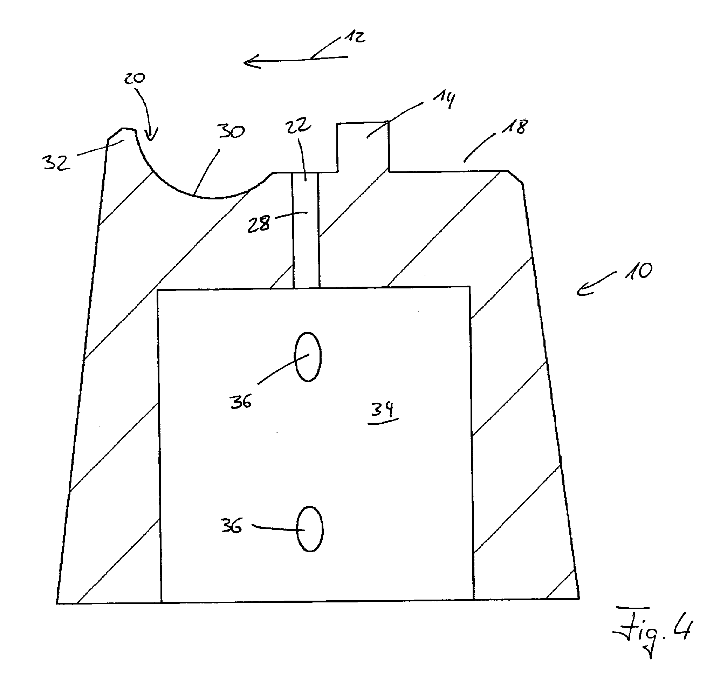

Figur 4 zeigt einen Schnitt durch den Warmölausleiter 10 aus Figur 3. Neben der bereits beschriebenen Oberflächengestaltung mit dem ersten Damm 14, dem zweiten Ölaustrag 18, dem ersten Ölaustrag 20 und der Öleinspritzeinrichtung 22 ist in Figur 4 eine Kammer 34 dargestellt, die mit einer Düse 28 der Öleinspritzeinrichtung 22 verbunden ist. Durch diese Kammer 34 wird die Öleinspritzeinrichtung 22 bzw. deren Düsen 28 mit frischem, gekühltem Öl versorgt. Die Kammer 34 ist über Zuleitungen 36 mit einer Ölzuführung verbunden, durch die frisches Öl bereitgestellt wird.

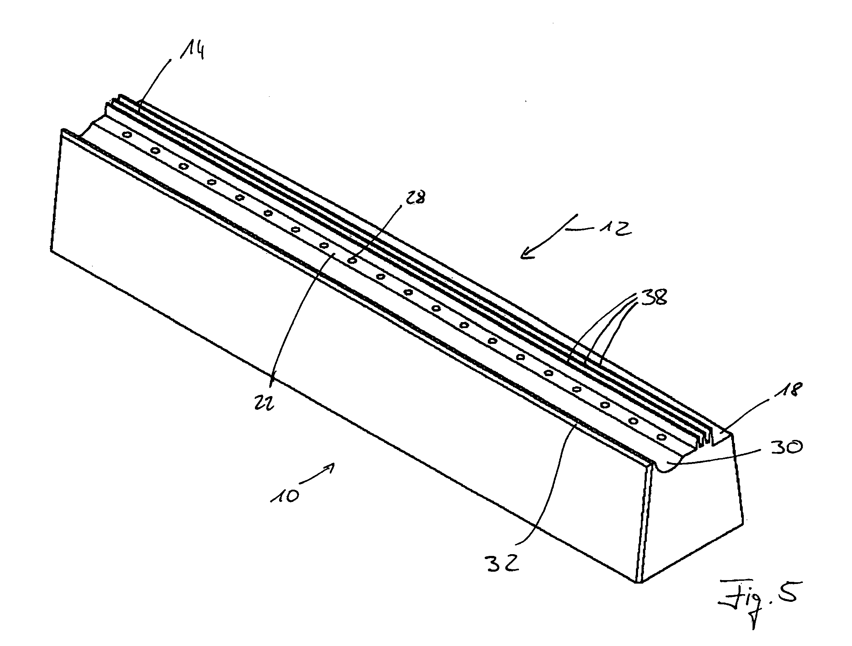

Figur 5 zeigt eine schematische 3D-Ansicht mit einer etwas anderen Ausgestaltung eines Warmölausleiters 10. Der Unterschied zwischen dem in Figur 3 und dem in Figur 5 gezeigten Warmölausleiter 10 besteht in der Form des ersten Damms 14. In Figur 5 ist der erste Damm 14 in Form von drei aufeinander folgenden, in Umfangsrichtung voneinander beabstandeten Lamellen 38 ausgestaltet. Jede dieser Lamellen 38 verfügt über eine Anströmkante, so dass durch einen derart ausgestalteten ersten Damm 14 ein noch größerer Anteil des an der Welle haftenden warmes Öles abgeblockt und dem zweiten Ölaustrag 18 zugeführt werden kann.

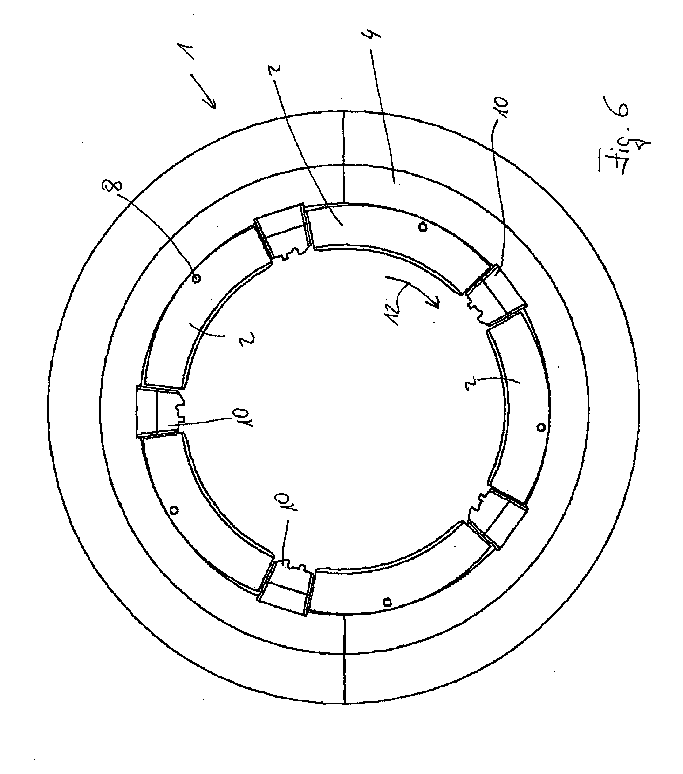

Figur 6 zeigt eine schematische Schnittdarstellung eines Kippsegmentlagers 1 gemäß einem Ausführungsbeispiel der vorliegenden Erfindung. Auch dieses Kippsegmentlager 1 verfügt über fünf Kippsegmente 2, die an einem Lagerring 4 über einen Lagerpunkt 8 gelagert sind. Um diesen Lagerpunkt sind sie auch kippbar. Zwischen jeweils zwei benachbarten Kippsegmenten 2 ist ein Warmölausleiter 10 angeordnet, der jedoch im Vergleich zum in Figur 1 gezeigten Beispiel eine etwas andere Form aufweist.

Eine Rotationsrichtung einer zu lagernden Welle ist wieder durch einen Richtungspfeil 12 angedeutet.

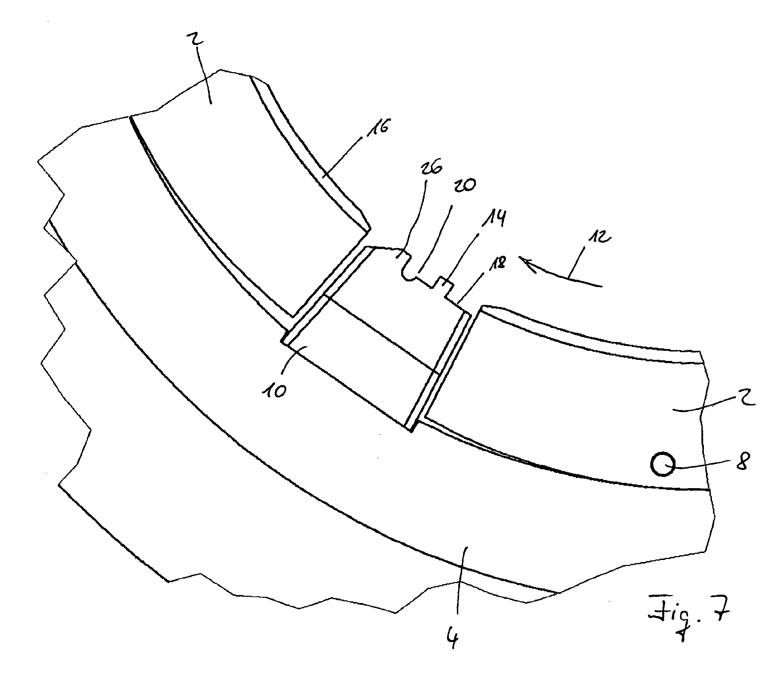

Figur 7 zeigt einen vergrößerten Ausschnitt aus Figur 6. Die der nicht gezeigten Welle zugewandte Oberfläche des Ölsausleiters 10 verfügt, wie im bisher gezeigten Beispiel, über einen ersten Damm 14, einen davor angeordneten zweiten Ölaustrag 18 sowie einen dahinter angeordneten ersten Ölaustrag 20, in dessen Bereich sich auch die nicht gezeigte Öleinspritzeinrichtung 22 befindet. Anders als im zuvor gezeigten Beispiel ist hier jedoch der zweite Damm 26 als Teil des Warmölausleiters 10 ausgebildet. Durch diesen zweiten Damm 26 wird verhindert, dass sich das Gemisch aus frischem, durch die Öleinspritzeinrichtung 22 eingespritzten Öl und dem von der Welle abgelösten Ölfilm in einen Schmierspalt zwischen einer Lagerfläche 16 des folgenden Kippsegmentes 2 und der nicht gezeigten Welle bewegt. Auf der hinteren, abgeschrägten Fläche des zweiten Damms 26 befindet sich eine Öleinbringvorrichtung, die in Figur 7 jedoch nicht gezeigt ist.

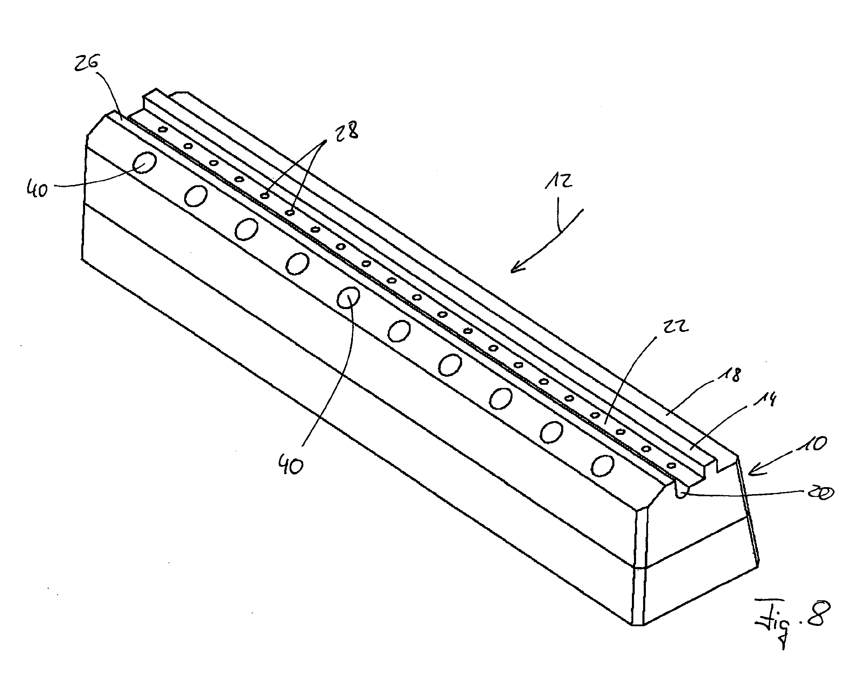

Figur 8 zeigt eine schematische 3D-Ansicht eines Warmölausleiters 10, wie er in Figur 7 und 6 gezeigt ist. Von vorn nach hinten weist auch die Oberfläche eines derartigen Warmölausleiters 10 zunächst einen zweiten Ölaustrag 18 sowie einen ersten Damm 14 auf, mit dem ein Großteil des sich an der Welle befindlichen erwärmten Öles geblockt und aus dem Lager ausgeleitet werden kann. Dahinter befindet sich die Öleinspritzeinrichtung 22 sowie der erste Ölaustrag 20. Mit der Öleinspritzeinrichtung 22 wird ein an der Welle verbliebener Ölfilm des erwärmten Öles abgespritzt und gemeinsam mit dem Frischöl über den ersten Ölaustrag 20 ausgetragen. Der erste Ölaustrag 20 wird im gezeigten Ausführungsbeispiel von einem zweiten Damm 26 begrenzt, der das Gemisch aus dem durch die Öleinspritzeinrichtung 22 eingespritzten Frischöl mit dem von der Welle abgespritzten Ölfilm daran hindert, in einen Schmierspalt eines folgenden Kippsegmentes 2 einzudringen.

In Figur 8 sind zudem Düsen 40 gezeigt, die Teil der Öleinbringvorrichtung sind. Durch die Düsen 40 der Öleinbringvorrichtung wird kühles, frisches Öl eingebracht. Durch die leichte Neigung der Düsen 40 trifft dieses Öl unter einem geringen Einfallswinkel auf die Welle als das durch die Düsen 28 der Öleinspritzeinrichtung 22 eingespritzte Öl. Dadurch kommt es zu weniger Verwirbelungen und Turbulenzen, so dass allgemein eine laminarere Strömung erreicht wird. Zudem ist es durch diese Neigung möglich, dass über die Öleinbringvorrichtung bzw. deren Düsen 40 eingebrachte Öl direkt auf den Schmierspalt gerichtet einzubringen, so dass auch hier eine homogene und laminare Strömung erreicht wird. Zudem ist es möglich, durch die Düsen 40 das Öl mit einem geringeren Druck einzubringen, wodurch ebenfalls die Gefahr von Turbulenzen und den dadurch hervorgerufenen Reibungsverlusten minimiert wird.

Bei einer Ausgestaltung eines Warmölaüsleiters 10 gemäß den Figuren 7 und 8 ist es nicht mehr nötig, eine Lagerfläche 16 der Kippsegmente 2 mit einer besonders geformten Anströmkante 24 oder einer in dieser Lagerfläche 16 vorgesehenen Öleinbringvorrichtung zu versehen. Dies ist beispielsweise in Figur 7 deutlich zu erkennen.

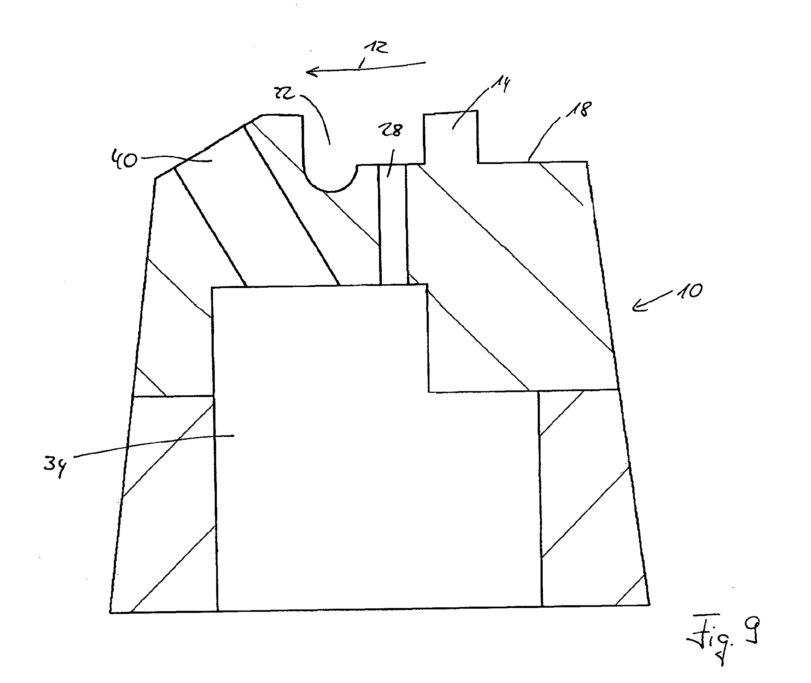

Figur 9 zeigt einen Querschnitt durch den in Figur 8 gezeigten Warmöläusleiter 10. Man erkennt sowohl die Düsen 28 der Öleinspritzeinrichtung 22 als auch die geneigten Düsen 40 der Öleinbringvorrichtung. Die Düsen 28, 40 werden durch die gleiche Kammer 34 mit Öl versorgt, die an ein Ölzuführsystem angeschlossen ist.

### Bezugszeichenliste

- 1 -: Kippsegmentlager
- 2-: Kippsegment
- 4 -: Lagerring
- 6 -: Außenfläche
- 8 -: Lagerpunkt
- 10 -: Warmölausleiter
- 12 -: Richtungspfeil
- 14 -: erster Damm
- 16 -: Lagerfläche
- 18 -: zweiter Ölaustrag
- 20 -: erster Ölaustrag
- 22 -: Öleinspritzeinrichtung
- 24 -: Anströmkante
- 26 -: zweiter Damm
- 28 -: Düse
- 30 -: Ableitfläche
- 32 -: Ableitkante
- 34 -: Kammer
- 36 -: Zuleitung
- 38 -: Lamelle
- 40 -: Düse

## Patentansprüche

1. Kippsegmentlager (1) zum Lagern einer Welle mit einer Längsachse, das wenigstens zwei in Umfangsrichtung voneinander beabstandete Kippsegmente (2),
die jeweils eine Lagerfläche (16) aufweisen,
und wenigstens einen Warmölausleiter (10) aufweist, der in einem Zwischenraum zwischen den wenigstens zwei Kippsegmenten (2) angeordnet ist,
wenigstens einen sich in axialer Richtung erstreckenden ersten Damm (14),
eine in einer Umlaufrichtung der Welle hinter dem ersten Damm (14) angeordnete Öleinspritzeinrichtung (22), und
einen ersten Ölaustrag (20) aufweist,
wobei
die Öleinspritzeinrichtung (22) eingerichtet ist, Öl derart auf die Welle zu spritzen, dass an der Welle haftendes Öl abgelöst wird und sich ein Gemisch aus dem abgelösten Öl und dem eingespritzten Öl bildet, und
durch den ersten Ölaustrag (20) zumindest ein Teil des Gemisches austragbar ist, **dadurch gekennzeichnet, dass** in Umlaufrichtung der Welle hinter dem ersten Ölaustrag (20) ein zweiter Damm (26) und dahinter eine Öleinbringvorrichtung angeordnet ist, wobei der zweite Damm (26) und die Öleinbringvorrichtung Teile des Warmölausleiters (10) sind.

2. Kippsegmentlager (1) nach Anspruch 1, **dadurch gekennzeichnet, dass** in Umlaufrichtung der Welle vor dem ersten Damm (14) ein zweiter Ölaustrag (18) angeordnet ist.

3. Kippsegmentlager (1) nach Anspruch 1 oder 2, **dadurch gekennzeichnet, dass** die Öleinspritzeinrichtung (22) eine Mehrzahl in axialer Richtung voneinander beabstandete Düsen (28) aufweist.

4. Kippsegmentlager (1) nach einem der vorstehenden Ansprüche, **dadurch gekennzeichnet, dass** der erste Damm (14) und/oder der zweite Damm (26) derart gebogen ausgestaltet ist, dass sich ein in axialer Richtung mittlerer Anteil des jeweiligen Dammes (14, 26) in Umlaufrichtung der Welle weiter vorn befindet als in axialer Richtung äußere Anteile des jeweiligen Dammes (14, 26).

5. Kippsegmentlager (1) nach einem der vorstehenden Ansprüche, **dadurch gekennzeichnet, dass** der erste Damm (14) und/oder der zweite Damm (26) eine Mehrzahl von in Umfangsrichtung voneinander beabstandeten Lamellen (38) umfasst.

6. Kippsegmentlager (1) nach einem der vorstehenden Ansprüche, **dadurch gekennzeichnet, dass** der erste Damm (14) und/oder der zweite Damm (26) eine Ableitfläche umfasst, die derart geformt ist, dass sich in Umdrehungsrichtung der Welle vor dem jeweiligen Damm (14, 26) befindliches Öl in axialer Richtung aus dem Kippsegmentlager (1) leitbar ist.

7. Kippsegmentlager (1) nach einem der vorstehenden Ansprüche, **dadurch gekennzeichnet, dass** eine Mehrzahl an Kippsegmenten (2) vorgesehen ist und sich in jedem Zwischenraum zwischen zwei benachbarten Kippsegmenten (2) jeweils ein Warmölausleiter (10) befindet.

8. Kippsegmentlager (1) nach Anspruch 7, **dadurch gekennzeichnet, dass** die Warmölausleiter (10) in den Zwischenräumen baugleich sind.

## Claims

1. Tilting-pad bearing (1) for mounting a shaft with a longitudinal axis, said tilting-pad bearing having at least two tilting pads (2), which are spaced from one another in the peripheral direction
and each have a bearing face (16),
and at least one warm oil diverter (10), which is arranged in a gap between the at least two tilting pads (2),
at least one first dam (14) extending in the axial direction,
an oil injection device (22) arranged after the first dam (14) in a direction of revolution of the shaft, and
a first oil discharge (20),
wherein
the oil injection device (22) is adapted to spray oil onto the shaft in such a way that oil adhering to the shaft is detached and a mixture of the detached oil and the injected oil forms,
and at least some of the mixture can be discharged by means of the first oil discharge (20), **characterized in that** a second dam (26) is arranged after the first oil discharge (20) in the direction of revolution of the shaft, followed by an oil introduction device wherein the second dam (26) and the oil introduction device are parts of the warm oil diverter (10).

2. Tilting-pad bearing (1) according to Claim 1, **characterized in that** a second oil discharge (18) is arranged before the first dam (14) in the direction of revolution of the shaft.

3. Tilting-pad bearing (1) according to Claim 1 or 2, **characterized in that** the oil injection device (22) has a plurality of nozzles (28) spaced from one another in the axial direction.

4. Tilting-pad bearing (1) according to one of the preceding claims, **characterized in that** the first dam (14) and/or the second dam (26) is/are curved in such a way that a central portion in the axial direction of the respective dam (14, 26) is located further forward in the direction of revolution of the shaft than outer portions in the axial direction of the respective dam (14, 26).

5. Tilting-pad bearing (1) according to one of the preceding claims, **characterized in that** the first dam (14) and/or the second dam (26) comprises a plurality of lamellae (38) spaced from one another in the peripheral direction.

6. Tilting-pad bearing (1) according to one of the preceding claims, **characterized in that** the first dam (14) and/or the second dam (26) comprises a conducting face, which is shaped in such a way that oil located in front of the respective dam (14, 26) in the direction of rotation of the shaft can be guided from the tilting-pad bearing (1) in the axial direction.

7. Tilting-pad bearing (1) according to one of the preceding claims, **characterized in that** a plurality of tilting pads (2) are provided and a warm oil diverter (10) is located in each gap between each two adjacent tilting pads (2).

8. Tilting-pad bearing (1) according to Claim 7, **characterized in that** the warm oil diverters (10) in the gaps are of identical design.

## Revendications

1. Palier à segments oscillants (1) pour tenir un arbre avec un axe longitudinal, qui comprend au moins deux segments oscillants (2) écartés l'un de l'autre en direction périphérique,
qui comprennent chacun une surface de palier (16),
et qui comprend au moins un conduit de sortie (10) pour huile chaude, qui est agencé dans un intervalle entre lesdits au moins deux segments oscillants (2),
au moins un premier barrage (14) s'étendant en direction axiale,
un moyen d'injection d'huile (22) agencé derrière le premier barrage (14) en direction de rotation de l'arbre, et
une première évacuation d'huile (20),
dans lequel
le moyen d'injection d'huile (22) est conçu pour projeter de l'huile sur l'arbre de telle manière que l'huile qui adhère à l'arbre est détachée et qu'il se forme un mélange de l'huile détachée et de l'huile projetée, et au moins une partie du mélange est susceptible d'être évacuée au moyen de la première évacuation d'huile (20),
**caractérisé en ce que**, en direction de rotation de l'arbre, un second barrage (26) est agencé derrière la première évacuation d'huile (20) et un dispositif d'introduction d'huile est agencé derrière celui-ci, et dans lequel le second barrage (26) et le dispositif d'introduction d'huile font partie du conduit de sortie (10) pour huile chaude.

2. Palier à segments oscillants (1) selon la revendication 1, **caractérisé en ce qu'**une seconde évacuation d'huile (18) est agencée devant le premier barrage (14) en direction de rotation de l'arbre.

3. Palier à segments oscillants (1) selon la revendication 1 ou 2, **caractérisé en ce que** le moyen d'injection d'huile (22) comprend une pluralité de buses (28) écartées les unes des autres en direction axiale.

4. Palier à segments oscillants (1) selon l'une des revendications précédentes, **caractérisé en ce que** le premier barrage (14) et/ou le second barrage (26) est conçu sous forme cintrée de telle manière qu'une part médiane, en direction axiale, du barrage respectif (14, 26) se trouve plus loin en avant, en direction de rotation de l'arbre, que les parts extérieures en direction axiale du barrage respectif (14, 26).

5. Palier à segments oscillants (1) selon l'une des revendications précédentes, **caractérisé en ce que** le premier barrage (14) et/ou le second barrage (26) inclut une pluralité de lamelles (38) écartées les unes des autres en direction périphérique.

6. Palier à segments oscillants (1) selon l'une des revendications précédentes, **caractérisé en ce que** le premier barrage (14) et/ou le second barrage (26) comporte une surface de dérivation qui est conformée de telle façon que l'huile qui se trouve devant le barrage respectif (14, 26), en direction de rotation de l'arbre, est susceptible d'être dérivé en direction axiale hors du palier à segments oscillants.

7. Palier à segments oscillants (1) selon l'une des revendications précédentes, **caractérisé en ce qu'**il est prévu une pluralité de segments oscillants (2) et **en ce qu'**un conduit de sortie (10) pour huile chaude se trouve respectivement dans chaque intervalle entre deux segments oscillants voisins (2).

8. Palier à segments oscillants (1) selon la revendication 7, **caractérisé en ce que** les conduits de sortie (10) dans les intervalles sont de construction identique.
